# EUROPEAN PATENT SPECIFICATION

(11) **EP 1 541 899 B1**
(45) Date of publication and mention of the grant of the patent: **03.09.2008**
(21) Application number: 04105435.4
(22) Date of filing: 01.11.2004
(51) Int. Cl.: F16H 57/02

(54) **Locking device for locking a turnable means**
Verriegelungsvorrichtung für einen drehenden Apparatus
Dispositif de verrouillage pour un appareil rotativ

(30) Priority: 09.12.2003 SE 3032984
(43) Date of publication of application: 15.06.2005
(73) Proprietor: Scania CV AB (publ), 151 87 Södertälje (SE)
(72) Inventor: Holmgren, Jimmy, 15395, Järna (SE)

(56) References cited:
- EP-A- 0 522 739
- US-A- 1 512 402
- US-A- 1 556 875
- US-B1- 6 532 660

## Description

### BACKGROUND TO THE INVENTION, AND STATE OF THE ART

The present invention relates to a locking device for locking a turnable means according to the preamble of claim 1.

The function of a gearbox in a vehicle needs to be maintained with unchanged quality despite varying operating conditions. It is therefore necessary that it be possible for the changes in length which gearbox shafts undergo due to varying temperatures to be absorbed without affecting gearbox function. Many gearboxes therefore have axial play in the bearings of their mainshaft and countershaft so that such shaft length changes can be absorbed.

Such axial play may be catered for by at least one out of the respective mainshaft and countershaft bearings being provided with an axially movable bearing race. The respective mainshaft and countershaft bearings are usually applied in apertures in an endwall of the gearbox. In such cases the respective movable bearing races are during operation enabled to reposition themselves in said apertures by axial play defined by the position of a so-called ring screw applied from the outside of the gearbox. The ring screw comprises an external gripping portion for turning the ring screw and a tubular portion with external threads intended to be screwed into correspondingly shaped internal threads in the aperture.

A locking device is usually used for locking the ring screw in the rotational position which results in the desired amount of play. A conventional such locking device comprises a washer fastened by means of a bolt in one of two holes provided adjacent to the aperture in the endwall. The gripping portion of each ring screw comprises a multiplicity of recesses evenly distributed along a peripheral surface. In the fitted state of the locking device, the washer fits positively by shape into one of the recesses and locks the ring screw. The bolt is applied in one of the two holes whereby the washer can be inserted in a recess with the least possible adjustment of the rotational position of the ring screw. The ring screw can thus be locked in a relatively large number of fixed rotational positions per revolution. The axial play desired for the movable bearing race can thus be provided with good accuracy. The gearbox endwall is relatively sensitive from the strength point of view, at least in the vicinity of the aperture for the countershaft. It would therefore be desirable not to have to drill two holes and mill planar surfaces round the holes in this area, operations which are necessary for fastening the known locking device.

EP-A1-0522739 describes a locking device according to the preamble of claim 1.

US-A-1 556 875 shows a locking device for locking a threaded ring in a rotational position in which it compresses a packing and holds an anti-friction bearing against a flange . The ring has an annular axial surface provided with a multiplicity of lugs. The locking device is a key that has a pair of radially arranged openings adapted to be seated over any desired pair of lugs in order to lock the ring in a rotational position defined by the position of said pairs of lugs. A clamping bolt is adapted to fix the key in a stationary position.

### SUMMARY OF THE INVENTION

One object of the present invention is to provide a locking device which can in a functional manger lock in a large number of fixed rotational positions a turnable means which comprises peripheral recesses, while at the same time the locking device can be fastened with reduced machining of the area adjacent to the turning means.

This object is achieved with a locking element of the kind mentioned in the introduction which characterised by the features indicated in the characterising part of claim 1. The locking device thus comprises a locking element with a locking surfaces so shaped that it can be inserted in any desired recess of the turnable means. According to the invention, such a locking surface makes it possible to lock the turnable means in one rotational position per recess per revolution. The locking surface of the locking element is thus also so shaped as to enable it to accommodate the protruding portions inevitably present between adjacent recesses. According to the invention, such an accommodating locking surface also makes it possible to lock the turnable means in one further rotational position per protruding portion per revolution. The locking element can thus lock the turnable means in two rotational positions per recess per revolution. Such a locking element thus provides a locking capacity corresponding to that of a conventional locking device which has a washer applicable in one of two possible holes by the means of a bolt In contrast, the locking element according to the present invention need only be applicable in one position. Said fastener can thus provide for application of the locking element by means of, for example, only one hole. A suitably shaped locking element enables this hole to be situated at a distance from the sensitive area which is immediately adjacent to the turnable means.

According to a preferred embodiment of the invention, said locking surface comprises two convex areas and an intermediate concave area. The convex areas may be so shaped that they each fill the side region of the recess when they are in an inserted state. The locking surface can thus be inserted in each of said recesses in order to lock the turnable means. The presence of the concave area between the convex areas does not reduce the ability of the locking element to lock the turnable means when locking engagement between the locking surface and the recess is substantially effected at the side regions of the recess. The concave area has with advantage a concave shape which continues the shape of the protruding portions of the turnable means. The concave area can thus accommodate and grip any desired protruding portion situated between two recesses so that the turnable means is locked in a rotational position defined by the position of the protruding portion.

According to another preferred embodiment of the present invention, the locking element has running through it a hole whereby a fastener in the form of a fastening means is adapted to being applied through said hole in order to fasten the locking element to a surface. With a fastening means in the form of a bolt, only one threaded hole need be applied in said surface for accommodating the fastening means and the fastened locking element. The locking element may comprise a base portion provided with said hole for accommodating the fastening means, and a locking portion which protrudes from the base portion and has a peripheral surface which comprises said locking surface. A locking portion of suitable extent makes it possible for the hole for accommodating the fastening means to be applied at a distance from the turnable means. Said hole can thus be applied in a less sensitive area from the strength point of view. With advantage, said fastener comprises a stop surface against which an abutting surface of the locking element is adapted to being applied to prevent rotary movement of the locking element about the fastening means. There is thus assurance that the locking element will remain in a stationary position, which is likely to be a prerequisite for the locking element to be able to provide secure locking of the turnable means. The locking element may comprise an abutting portion which protrudes from the base portion and has a peripheral surface which comprises said abutting surface. The length of the abutting portion and its extent in a direction away from the base portion are such that the abutting surface comes into contact with a suitable stationary stop surface. With advantage, said stop surface is a suitably situated surface adjacent to the turnable means.

According to another preferred embodiment of the present invention, the turnable means is an annular screw means which can be screwed into an aperture with delineating surfaces which are provided with threads whereby the locking element is adapted to locking the screw means in a rotational position which corresponds to a desired axially inserted position of the screw means in the aperture. As a screw means, in a fitted state, is limited to following a helical path, it is possible to lock a screw means in a desired axial position by locking the screw means in a corresponding rotational position. Said aperture may be accommodated in an endwall of a gearbox and the annular screw means may be adapted to adjusting axial play for a movable bearing race of a bearing which supports a rotatable shaft in the gearbox. Axial play as desired for the movable bearing race can be provided by locking the annular screw means in a particular rotational position by means of the locking element. The bearing race is with advantage an outer bearing race for a bearing which supports a mainshaft or a countershaft in the gearbox. Such a movable bearing race makes it possible for a certain amount of shaft length change to be acceptable without reducing gearbox function.
According to another preferred embodiment of the present invention, the abutting surface of the locking element is adapted to being applied to a stop surface of a non-rotatable shaft in the gearbox. With advantage, this shaft is an intermediate reverse gear shaft. The intermediate reverse gear shaft, which is used when reversing a vehicle, is usually fastened in an aperture in the gearbox in the vicinity of the apertures for the mainshaft and the countershaft. An intermediate reverse gear shaft usually has no locking device to prevent the shaft repositioning itself in the aperture. The intermediate reverse gear shaft may therefore be subject to rotary movements in the aperture when the gearwheel carried by the shaft rotates. In such cases the intermediate reverse gear shaft is liable to unnecessary wear. The non-rotatable shaft may be fastened in an aperture in the gearbox endwall whereby said stop surface is comprised within a recess which has side surfaces intended to prevent axial movement of the bearing in said aperture. As well as locking the annular means in a rotational position, the locking device thus also prevents said shaft, which may be an intermediate reverse gear shaft, not only from rotating in the aperture but also from moving in an axial direction.

### BRIEF DESCRIPTION OF THE DRAWINGS

A preferred embodiment of the invention is described below by way of example with reference to the attached drawings, in which:
- Fig. 1: depicts schematically a gearwheel gearbox,
- Fig. 2: depicts the fastening of a countershaft in the gearbox,
- Fig. 3: depicts an endwall of the gearbox which is provided with a locking device according to the present invention,
- Fig. 4: depicts a view corresponding to Fig. 3 but with the locking element in a different position.
- Fig. 5: depicts a separate view of the locking element and
- Fig. 6: depicts the fastening of an intermediate reverse gear shaft in the gearbox.

### DETAILED DESCRIPTION OF A PREFERRED EMBODIMENT OF THE INVENTION

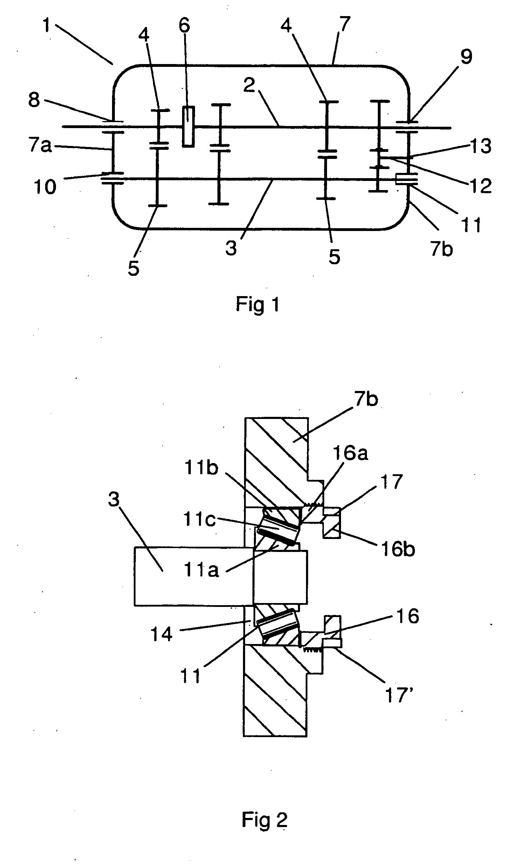

Fig. 1 depicts schematically a gearwheel gearbox 1 for a vehicle. The gearwheel gearbox 1 comprises in a conventional manner a mainshaft 2 and, arranged parallel with the latter, a countershaft 3. The mainshaft 2 is provided with a number of gearwheels 4 and the countershaft 3 is likewise provided with a number of gearwheels 5. The gearwheels 4, 5 are mounted in pairs on the respective shafts 2, 3. The number of gearwheels 4, 5 arranged in pairs depends on the number of shafts in the gearbox 1. The mainshaft 2 comprises not only the gearwheels 4 but also a number of synchronising devices 6, one of which is depicted, catering for engagement and disengagement of the gears in the gearbox 1. A housing 7 constitutes an enclosing casing for the gearbox 1. The mainshaft 2 is supported in the endwalls 7a, b of the housing 7 by means of bearings 8, 9. The countershaft 3 is supported in the endwalls 7a, b of the housing 7 by means of bearings 10, 11. An intermediate reverse gear shaft 12, which is used when a reverse gear is engaged, is fastened in an aperture 13 in the endwall 7b.

Fig. 2 depicts in more detail the fastening of the countershaft 3 in the endwall 7b. The endwall 7b has an aperture 14 for accommodating an end portion of the countershaft 3 which is fitted in the aperture 14 by means of a tapered rolling bearing 11. The rolling bearing 11 comprises an inner bearing race 11a, an outer bearing race 11band a number of intermediate rollers 11c. The inner bearing race 11a is pressed firmly onto the countershaft 3 in a suitable manner. The inner bearing race 11a and the rollers 11c thus accompany in an axial direction any changes of length of the countershaft 3 which occur at varying temperatures. For the outer bearing race 11b to be able to move in an axial direction with the inner bearing race 11a and the rollers 11c, the outer bearing race 11b needs to be fitted with axial play in the aperture 14. To provide suitable play for the outer bearing race 11b, a first ring screw 16 is applied externally about the bearing race 11b in the aperture 14. The ring screw 16 thus constitutes a delineating surface which limits outward movement of the bearing race 11b in an axial direction. The ring screw 16 comprises a tubular portion 16a provided with external threads so that it can be screwed into correspondingly shaped internal threads on a delineating surface in the aperture 14. The ring screw 16 also comprises an external gripping portion 16b by means of which the screwing movement is applied. The outer gripping portion 16b is provided with a multiplicity of recesses 17 along a peripheral surface. There are protruding portions 17' between adjacent recesses 17. The ring screw 16 is adapted to being screwed into the aperture 14 until play as desired is provided for the bearing race 11b. The outer bearing race 11b can thus move in an axial direction within a limited range. The outer bearing race 11b therefore accompanies the other parts of the bearing 11 whenever the latter moves in an axial direction due to a change in length of the countershaft 3.

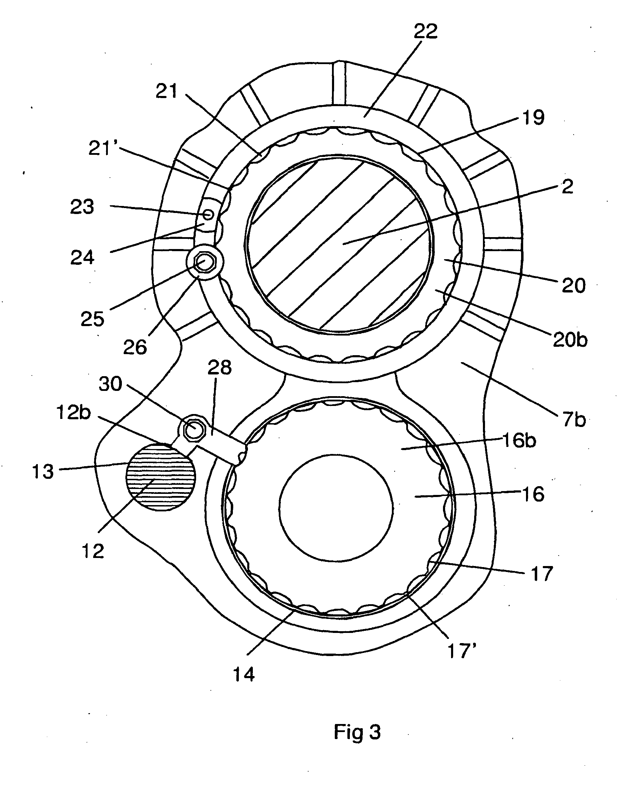

Fig. 3 depicts the right endwall 7b of the gearbox 1 as seen from outside. It shows the first ring screw 16 provided with uniformly shaped recesses 17 which extend round the peripheral surface of the gripping portion 16b at constant spacing. The endwall 7b comprises an aperture 19 for supporting the mainshaft 2. It is likewise necessary that any changes in length which the mainshaft 2 undergoes due to varying temperatures be absorbed without affecting the function of the gearbox. As well as running through the endwall 7b, the mainshaft 2 also has therein a bearing corresponding in principle to that of the countershaft 3. To provide here also axial play as desired for an undepicted outer bearing race, a second ring screw 20 is arranged in the aperture 19. The second ring screw 20 likewise comprises a threaded portion which can be screwed into correspondingly shaped threads in the aperture 19. The ring screw 20 comprises an external gripping portion 20b provided with a peripheral surface with a multiplicity of uniformly shaped recesses 21 which extend round the peripheral surface at constant spacing and between which the peripheral surface forms protruding portions 21'.

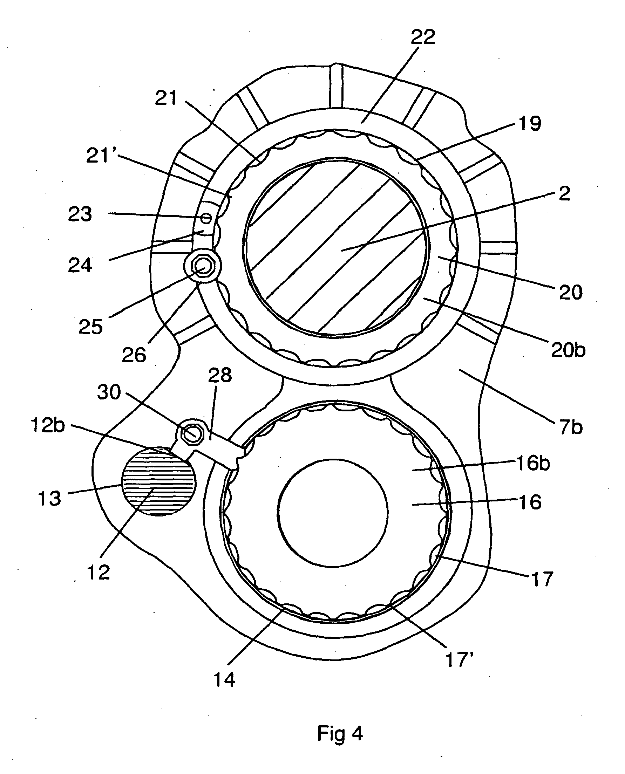

When the second ring screw 20 is screwed into the aperture 19 to a position such as to provide play as desired, the ring screw 20 needs locking. The endwall 7b has a protruding annular portion 22 which extends round the hole 19. Two threaded holes 23 each surrounded by a planar milled surface 24 are provided in the annular portion 22. One of the holes 23 is visible in Figs. 3 and 4, and a bolt 25 with a washer 26 is applied in the other hole 23. The two holes 23 are mutually situated in such a way that when one hole 23 is substantially exactly radially external to a recess 21 of the ring screw 20, the other hole 23 is radially external to a protruding portion 21'. The shape of the washer 26 is such that part of it can be inserted to fit positively by shape in any desired recess 21. The bolt 25 is applied in whichever of the holes 23 results in the least adjustment of the rotational position of the ring screw 20 from a desired position for inserting the washer 26 in a recess 21. The ring screw 20 can thus be locked in two fixed rotational positions per recess 21 per revolution of the ring screw 20. This method of locking a ring screw by means of a bolt and a washer is already known and is also used for locking the ring screw 16 which adjusts the bearing play of the countershaft 3. A problem here is that the gearbox endwall 7b adjacent to the aperture 14 for the countershaft 3 is relatively sensitive from the strength point of view. It is therefore desirable to avoid mechanical processing of the endwall 7b in this area in the form of machining of two threaded holes and milled planar surfaces to provide alternative fastenings for the bolt 25 and the washer 26.

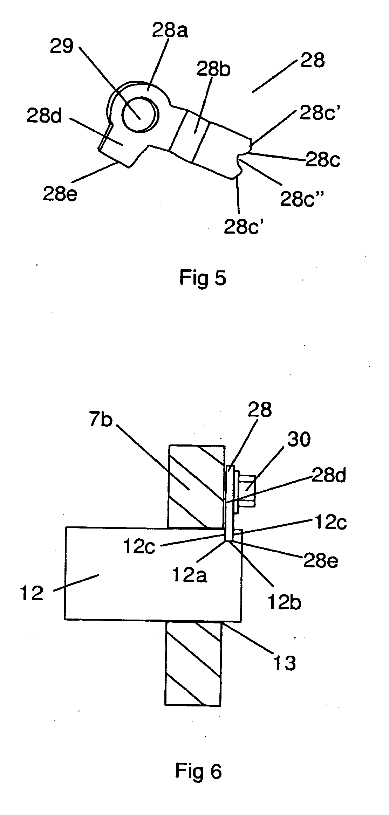

According to the present invention, a locking device is used instead for locking the ring screw 16 in a desired rotational position. The locking device comprises a locking element 28 depicted separately in Fig. 5. The locking element 28 comprises a base portion 28a which has a hole 29 running through it. The base portion 28a has extending from it a locking portion 28b which has a peripheral locking surface 28c. The locking surface 28c comprises two convex areas 28c' and an intermediate concave area 28c". The base portion 28a has extending from it in another direction an abutting portion 28d which has a peripheral abutting surface 28e. The locking element 28 is adapted to being fixed in a stationary position relative to the endwall 7b by means of a bolt 30 applied through the hole 29. All that is thus needed here is the creation of a threaded hole in the endwall 7b for fastening the locking element 28. With a locking portion 28b of suitable length, the base portion 28a with said hole 29 for accommodating the bolt 30 can be situated at a distance from the aperture 14 in an area where the end portion 7b is less sensitive. The endwall 7b thus has an aperture 13 for accommodating an end portion of the intermediate reverse gear shaft 12. A recess 12a is made here in a peripheral surface of the intermediate reverse gear shaft 12 to form a substantially planar bottom surface with the purpose of constituting a stop surface 12b. The stop surface 12b is intended to come into contact with the locking element's planar abutting surface 28e. In Fig. 6 it is also discernible that the recess 12a is situated at a distance from the outer end surface of the intermediate reverse gear shaft 12. The recess 13a is thus also provided with two radial side surfaces 13c.

When the first ring screw 16 has been screwed into the aperture 14 to an axial position such that the outer bearing race 11b is provided with play as desired, the locking element 28 is fastened to the endwall 7b by means of the bolt 30. Depending on the rotational position of the ring screw 16, the locking element's locking surface 28c is applied so that the two convex areas 28c' project the same recess 17 as depicted in Fig. 3 or into two adjacent recesses 17, while at the same time the concave area 28c" accommodates the protruding portion 17' situated between the two recesses 17', as depicted in Fig. 4. The result is the same number of fixed locking positions for the ring screw 16 with the locking element 28 as with a conventional locking device comprising a washer 26 which is fastened with a bolt 25 in one of two possible holes 23. The locking element 28 is fastened in a position such that the abutting surface 28e comes into contact with the stop surface 12b in the recess 13a. There is thus assurance that the locking element 28 will not rotate about the bolt 30 and that the locking of the ring screw 16 cannot slacken. At the same time, the contact of the abutting surface 28e with the stop surface 12b provides assurance that the intermediate reverse gear shaft 12 will not perform any rotary movements in the aperture 13 when the gearwheel mounted for rotation on the intermediate reverse gear shaft 12 rotates. Unnecessary wear of the intermediate reverse gear shaft 12 is thus prevented. The fact that the recess 12a comprises radial side surfaces 12c also effectively prevents axial movement of the intermediate reverse gear shaft 12 in the aperture 13.

The invention is in no way limited to the embodiment described in the drawings but may be varied freely within the scopes of the claims. The locking device may be used for locking in a rotational position substantially any desired turnable means which has a peripheral surface with a multiplicity of recesses. The locking device according to the invention may of course be applied in such a way that instead of locking the ring screw for the countershaft it locks the ring screw for the mainshaft. The locking element may also be provided with two or more locking portions and two or more abutting portions for locking two or more turnable means simultaneously.

## Claims

1. A locking device for locking a turnable means (16), which comprises a peripheral surface with a multiplicity of recesses (17), whereby the locking device comprises a locking element (28), with a locking surface (28c) so shaped that it can be inserted in any desired recess (17) of the turnable means in order to lock the turnable means (16) in a rotational position defined by the position of said recess (17) such that it is possible to lock the turnable means in one rotational position per recess per revolution, and fasteners (12b, 30) adapted to fixing the locking element (28) in a stationary position, **characterised in that** said locking surface (28c) is also shaped to accommodate any desired one of the projecting portions (17') which are present between adjacent recesses (17), in which accommodating state it locks the turnable means (16) in a rotational position defined by the position of said protruding portion (17') such that it is also possible to lock the turnable means in one further rotational position per protruding portion per revolution.

2. A locking device according to claim 1, **characterised in that** said locking surface (28c) comprises two convex areas (28c') and an intermediate concave area (28c").

3. A locking device according to claim 1 or 2, **characterised in that** the locking element (28) comprises a hole (29) through which a fastener in the form of a fastening means (30) is adapted to being applied in order to fasten the locking element (28) to a surface (7b).

4. A locking device according to claim 3, **characterised in that** the locking element (28) comprises a base portion (28a) provided with said hole (29), and a locking portion (28b) which protrudes from the base portion (28a) and which has a peripheral surface constituting said locking surface (28c).

5. A locking device according to claim 3 or 4, **characterised in that** said fastener comprises a stationary stop surface (12b) to which an abutting surface (28e) of the locking element (28) is adapted to being applied so that rotary movement of the locking element (28) about the fastening means (30) is prevented.

6. A locking device according to claim 5, **characterised in that** the locking element (28) comprises an abutting portion (28d) which protrudes from the base portion (28) and which has a peripheral surface constituting said abutting surface (28e).

7. A locking device according to any one of the foregoing claims, **characterised in that** the turnable means is an annular screw means (16) which can be screwed into an aperture (14) with delineating surfaces provided with threads, and the locking element (28) is adapted to locking the screw means (16) in a rotational position corresponding to a desired inserted axial position of the screw means (16) in the aperture (14).

8. A locking device according to claim 7, **characterised in that** said aperture (14) is arranged in an endwall (7b) of a gearbox (1) and that the annular screw means (16) is adapted to adjusting axial play for a-movable bearing race (11b) of a bearing (11) which supports a rotatable shaft (3) in the gearbox (1).

9. A locking device according to claims 5 and 8, **characterised in that** the locking element's abutting surface (28e) is adapted to being applied to a stop surface (12b) of a non-rotatable shaft (12) in the gearbox (1).

10. A locking device according to claim 9, **characterised in that** the non-rotatable shaft (12) is fastened in an aperture (13) in an endwall (7b) of the gearbox, and said stop surface (12b) is comprised within a recess (12b) which has side surfaces (12c) adapted to preventing axial movements of the shaft (12) in said aperture (13).

## Patentansprüche

1. Festsetzvorrichtung zum Festsetzen eines Drehkörpers (16), der eine Mantelfläche mit einer Vielzahl Vertiefungen (17) aufweist, wobei die Festsetzvorrichtung ein Festsetzelement (28) mit einer Festsetzfläche (28c) aufweist, die so geformt ist, dass sie in jede gewünschte Vertiefung (17) des Drehkörpers einsetzbar ist, um den Drehkörper (16) in einer durch die Stellung dieser Vertiefung (17) bestimmten Drehstellung festzusetzen, so dass es möglich ist, den Drehkörper in je einer Drehstellung pro Vertiefung und Umdrehung festzusetzen, und Befestigungsmittel (12b, 30) zum Befestigen des Festsetzelements (28) in einer ortsgebundenen Stellung,
**dadurch gekennzeichnet, dass** die Festsetzfläche (28c) auch zum Aufnehmen jedes gewünschten, zwischen benachbarten Vertiefungen (17) vorhandenen Vorsprungs (17') ausgebildet ist, wobei sie in diesem aufnehmenden Zustand den Drehkörper (16) in einer Drehstellung festsetzt, die durch die Stellung dieses Vorsprungs (17') bestimmt ist, so dass es auch möglich ist, den Drehkörper in je einer weiteren Drehstellung pro Vorsprung und Umdrehung festzusetzen.

2. Festsetzvorrichtung nach Anspruch 1,
**dadurch gekennzeichnet, dass** die genannte Festsetzfläche (28c) zwei konvexe Bereiche (28c') und einen dazwischenliegenden konkaven Bereich (28c") aufweist.

3. Festsetzvorrichtung nach Anspruch 1 oder 2,
**dadurch gekennzeichnet, dass** das Festsetzelement (28) ein Loch (29) aufweist, durch das ein Befestiger in Form eines Befestigungsmittels (30) einsetzbar ist, um das Festsetzelement (28) an einer Oberfläche (7b) zu befestigen.

4. Festsetzvorrichtung nach Anspruch 3,
**dadurch gekennzeichnet, dass** das Festsetzelement (28) einen mit dem genannten Loch (29) versehenen Basisabschnitt (28a) aufweist, und einen Festsetzabschnitt (28b), der sich von dem Basisabschnitt (28a) weg erstreckt und einen die genannte Festsetzfläche (28c) darstellenden Rand aufweist.

5. Festsetzvorrichtung nach Anspruch 3 oder 4,
**dadurch gekennzeichnet, dass** der genannte Befestiger eine ortsgebundene Anlagefläche (12b) aufweist, an die eine Anschlagfläche (28e) des Festsetzelements (28) anlegbar ist, so dass eine Drehbewegung des Festsetzelements (28) um das Befestigungsmittel (30) verhindert wird.

6. Festsetzvorrichtung nach Anspruch 5,
**dadurch gekennzeichnet, dass** das Festsetzelement (28) einen Anschlagabschnitt (28d) aufweist, der sich vom Basisabschnitt (28) weg erstreckt und eine die genannte Anschlagfläche (28e) bildende Randfläche hat.

7. Festsetzvorrichtung nach einem der vorangehenden Ansprüche,
**dadurch gekennzeichnet, dass** der Drehkörper ein ringförmiger Schraubkörper (16) ist, der sich in eine Öffnung (14) einschrauben lässt, deren Begrenzungsflächen mit Gewindegängen versehen sind, und dass das Festsetzelement (28) dazu ausgebildet ist, den Schraubkörper (16) in einer Drehstellung festzusetzen, die einer gewünschten axialen Eindringstellung des Schraubkörpers (16) in der Öffnung (14) entspricht.

8. Festsetzvorrichtung nach Anspruch 7,
**dadurch gekennzeichnet, dass** die genannte Öffnung (14) in einer Stirnwand (7b) eines Getriebes (1) angeordnet ist, und dass der ringförmige Schraubkörper (16) dazu vorgesehen ist, ein axiales Spiel für eine bewegliche Lagerlaufbahn (11b) eines Lagers (11) einzustellen, welches eine drehbare Welle (3) in dem Getriebe (1) trägt.

9. Festsetzvorrichtung nach den Ansprüchen 5 und 8,
**dadurch gekennzeichnet, dass** die Anschlagfläche (28e) des Festsetzelements dazu ausgebildet ist, an eine Anlagefläche (12b) einer nicht drehbaren Achse (12) im Getriebe (1) angelegt zu werden.

10. Festsetzvorrichtung nach Anspruch 9,
**dadurch gekennzeichnet, dass** die nicht drehbare Achse (12) in einer Öffnung (13) in einer Stirnwand (7b) des Getriebes befestigt ist, und dass die Anlagefläche (12b) in einer Vertiefung (12a) ausgebildet ist, die Seitenflächen (12c) aufweist, die dazu vorgesehen sind, axiale Bewegungen der Achse (12) in der genannten Öffnung (13) zu verhindern.

## Revendications

1. Dispositif de verrouillage destiné à verrouiller un appareil rotatif (16), comprenant une surface périphérique présentant plusieurs évidements (17), moyennant quoi le dispositif de verrouillage comprend un élément de verrouillage (28) comportant une surface de verrouillage (28c) façonnée de manière à pouvoir être insérée dans tout évidement souhaité (17) de l'appareil rotatif afin de verrouiller l'appareil rotatif (16) dans une position de rotation définie par la position dudit évidement (17) de sorte qu'il est possible de verrouiller l'appareil rotatif dans une position de rotation par évidement par révolution, et des pièces de fixation (12b, 30) conçues pour fixer l'élément de verrouillage (28) dans une position immobile, **caractérisé en ce que** ladite surface de verrouillage (28c) est également façonnée pour recevoir l'une quelconque des parties saillantes (17') présentes entre les évidements adjacents (17), qui dans son état de réception verrouille l'appareil rotatif (16) dans une position de rotation définie par la position de ladite partie saillante (17') de sorte qu'il est également possible de verrouiller l'appareil rotatif dans une autre position de rotation par partie saillante par révolution.

2. Dispositif de verrouillage selon la revendication 1, **caractérisé en ce que** ladite surface de verrouillage (28c) comprend deux zones convexes (28c') et une zone concave intermédiaire (28c").

3. Dispositif de verrouillage selon la revendication 1 ou 2, **caractérisé en ce que** l'élément de verrouillage (28) comprend un orifice (29) à travers lequel une pièce de fixation se présentant sous la forme d'un moyen de fixation (30) est conçue pour être appliquée afin de fixer l'élément de verrouillage (28) sur une surface (7b).

4. Dispositif de verrouillage selon la revendication 3, **caractérisé en ce que** l'élément de verrouillage (28) comprend une partie de base (28a) présentant ledit orifice (29), et une partie de verrouillage (28b) faisant saillie depuis la partie de base (28a) et présentant une surface périphérique constituant ladite surface de verrouillage (28c).

5. Dispositif de verrouillage selon la revendication 3 ou 4, **caractérisé en ce que** ladite pièce de fixation comprend une surface butoir immobile (12b) à laquelle une surface d'aboutement (28e) de l'élément de verrouillage (28) est adaptée à être appliquée de sorte que le mouvement rotatif de l'élément de verrouillage (28) autour du moyen de fixation (30) est empêché.

6. Dispositif de verrouillage selon la revendication 5, **caractérisé en ce que** l'élément de verrouillage (28) comprend une partie d'aboutement (28d) qui fait saillie depuis la partie de base (28) et qui présente une surface périphérique qui constitue ladite surface d'aboutement (28e).

7. Dispositif de verrouillage selon l'une quelconque des revendications précédentes, **caractérisé en ce que** ledit appareil rotatif est un appareil à vis annulaire (16) qui peut être vissé dans une ouverture (14) avec des surfaces de délimitation munies de filetages, et **en ce que** l'élément de verrouillage (28) est conçu pour verrouiller l'appareil à vis (16) dans une position de rotation correspondant à une position axiale insérée souhaitée de l'appareil à vis (16) dans l'ouverture (14).

8. Dispositif de verrouillage selon la revendication 7, **caractérisé en ce que** ladite ouverture (14) est agencée dans une paroi d'extrémité (7b) d'une boîte à engrenages (1) et **en ce que** l'appareil à vis annulaire (16) est conçu pour ajuster le jeu axial d'un chemin de roulement mobile (11b) d'un palier (11) qui supporte un arbre rotatif (3) dans la boîte à engrenages (1).

9. Dispositif de verrouillage selon les revendications 5 et 8, **caractérisé en ce que** la surface d'aboutement (28e) de l'élément de verrouillage est conçue pour être appliquée à une surface butoir (12b) d'un arbre non rotatif (12) dans la boîte à engrenages (1).

10. Dispositif de verrouillage selon la revendication 9, **caractérisé en ce que** l'arbre non rotatif (12) est fixé dans une ouverture (13) dans une paroi d'extrémité (7b) de la boîte à engrenages, et **en ce que** ladite surface buttoir (12b) est comprise dans un évidement (12b) présentant des surfaces latérales (12c) conçues pour empêcher les mouvements axiaux de l'arbre (12) dans ladite ouverture (13).
